(19) Europäisches Patentamt / European Patent Office / Office européen des brevets

(11) **EP 3 979 655 A1**

(12) **EUROPEAN PATENT APPLICATION**
published in accordance with Art. 153(4) EPC

(43) Date of publication:
**06.04.2022 Bulletin 2022/14**

(21) Application number: **20815485.6**

(22) Date of filing: **16.01.2020**

(51) International Patent Classification (IPC):
**H04N 21/254** (2011.01)    **H04N 21/258** (2011.01)
**G06Q 30/02** (2012.01)

(52) Cooperative Patent Classification (CPC):
**G06Q 30/02; H04N 21/254; H04N 21/258**

(86) International application number:
**PCT/JP2020/001148**

(87) International publication number:
**WO 2020/240911 (03.12.2020 Gazette 2020/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2019 JP 2019102306**

(71) Applicant: **Panasonic Intellectual Property
Management Co., Ltd.
Osaka-shi, Osaka 540-6207 (JP)**

(72) Inventors:
• **YAMAMOTO, Masaya**
  **Osaka-shi, Osaka 540-6207 (JP)**
• **TANAKA, Kotaro**
  **Osaka-shi, Osaka 540-6207 (JP)**
• **HITOTSUYA, Masashi**
  **Osaka-shi, Osaka 540-6207 (JP)**
• **YAMADA, Mitsuki**
  **Osaka-shi, Osaka 540-6207 (JP)**

(74) Representative: **Vigand, Philippe et al
Novagraaf International SA
Chemin de l'Echo 3
1213 Onex - Genève (CH)**

(54) **INFORMATION PROCESSING METHOD, INFORMATION PROCESSING SYSTEM, AND PROGRAM**

(57)    An information processing method includes: obtaining (S101), from each of one or more reproduction devices that have reproduced a content contained in a broadcast program, first information indicating a reproduction history of the content reproduced; obtaining (S102) second information indicating a display history of a web page displayed by each of one or more display devices; calculating (S103) an index indicating a relation between reproduction of the content by a first reproduction device among the one or more reproduction devices and display of the web page by a first display device that has a relation to the first reproduction device among the one or more display devices, based on the first information and the second information which are obtained; and outputting (S104) the index calculated in the calculating (S103).

FIG. 6

```
         ┌─────────┐
         │  Start  │
         └────┬────┘
              │                            S101
  ┌───────────────────────────────────────────┐
  │ Obtain first information from reproduction device │
  └───────────┬───────────────────────────────┘
              │                            S102
  ┌───────────────────────────────────────────┐
  │ Obtain second information from display device │
  └───────────┬───────────────────────────────┘
              │                            S103
  ┌───────────────────────────────────────────┐
  │              Calculate index               │
  └───────────┬───────────────────────────────┘
              │                            S104
  ┌───────────────────────────────────────────┐
  │               Output index                 │
  └───────────┬───────────────────────────────┘
              │
         ┌─────────┐
         │   End   │
         └─────────┘
```

EP 3 979 655 A1

## Description

[Technical Field]

The present disclosure relates to an information processing method, an information processing system, and a program.

[Background Art]

There have conventionally been support systems of supporting achievement at the target number of browsing and the target number of viewers, for commercial-message (CM) moving images for products and so on (see Patent Literature 1).

[Citation List]

[Patent Literature]

Patent Literature 1: Japanese Unexamined Patent Application Publication No. 2017-4490

[Summary of Invention]

[Technical Problem]

However, in the conventional systems, a relation between the viewing, by a user, of a CM moving image or such a broadcast content and the browsing, by the same user, of a web page cannot be obtained.

In view of the above, the present disclosure provides an information processing method and so on, through which appropriate information that indicates the relation between the viewing of a broadcast content and the browsing of a web page by individual users is outputted.

[Solution to Problem]

An information processing method according to the present disclosure includes: obtaining, from each of one or more reproduction devices that have reproduced a content contained in a broadcast program, first information indicating a reproduction history of the content reproduced; obtaining second information indicating a display history of a web page displayed by each of one or more display devices; calculating an index indicating a relation between reproduction of the content by a first reproduction device among the one or more reproduction devices and display of the web page by a first display device that has a relation to the first reproduction device among the one or more display devices, based on the first information and the second information which are obtained; and outputting the index calculated in the calculating.

According to the information processing method, the index indicating whether the reproduction of a content by the reproduction device and the display of a web page by the display device that has the relation to the reproduction device are performed with being associated with each other is calculated and outputted. Thus, according to the information processing method, appropriate information that indicates the relation between the viewing of a content and the browsing of a web page by individual users is outputted.

In the calculating, the index indicating that the display of the web page has been performed by the first display device based on an operation that a user has performed as a result of viewing the content reproduced by the first reproduction device may be calculated.

According to the above, the index outputted through the information processing method is an index reflecting that a user has displayed the web page with his/her intension of browsing the web page corresponding to the content that has been reproduced by the reproduction device, as a result of viewing the content reproduced by the first reproduction device. Accordingly, in the information processing method, appropriate information that indicates the relation between the viewing of a broadcast content and the browsing of a web page by individual users is outputted.

The index may be a ratio of a total number of times the display of the web page has been performed by the first display device based on an operation that a user has performed as a result of viewing the content reproduced by the first reproduction device, to a total number of times the user has viewed the content reproduced by the first reproduction device.

According to the above, the index outputted through the information processing method indicates a ratio of the viewing of the content from which a user has achieved at browsing the web page, among the total number of times the user has viewed contents. Accordingly, in the information processing method, appropriate and specific information that indicates the relation between the viewing of a broadcast content and the browsing of the web page by individual users is outputted.

The first information may include a reproduction date and time at which the reproduction of the content has been performed by the first reproduction device. The second information may include a display date and time at which the display of the web page has been performed by the first display device. In the calculating, the index may be calculated by comparing the reproduction date and time included in the first information obtained with the display date and time included in the second information obtained.

According to the above, the index that indicates a relation between the reproduction of a content and the display of a web page is calculated more easily, based on the determination using the reproduction date and time of the reproduction of the content by the reproduction device and the display date and time of the display of the web page by the display device. Accordingly, in the information processing method, appropriate information that indicates the relation between the viewing of the broadcast content and the browsing of the web page is more easily generated and outputted.

In the calculating, the index indicating that the display of the web page has been performed by first display device within a predetermined time period from the reproduction of the content by the first reproduction device may be calculated.

According to the above, it is determined that the reproduction of the content and the display of the web page are related with each other, based on the time difference between the reproduction date and time and the display date and time. Accordingly, in the information processing method, appropriate information that indicates the relation between the viewing of the broadcast content and the browsing of the web page by individual users is outputted more easily, based on the determination in accordance with the time difference.

The reproduction date and time may be identical to a broadcasting date and time of the content.

According to the above, the reproduction date and time is identical to the broadcasting date and time. In other words, the index is calculated based on the reproduction by the reproduction device that reproduces the broadcasted content in real time (e.g., a television receiver). Accordingly, in the information processing method, appropriate information that indicates the relation between the viewing of the broadcast content and the browsing of the web page by a user is outputted using the reproduction device that reproduces the broadcast content in real time.

The reproduction date and time may be later than a broadcasting date and time of the content.

According to the above, the reproduction date and time of the content is later than the broadcasting date and time. In other words, the aforementioned index is calculated based on the reproduction by the reproduction device that records a broadcasted content and thereafter reproduces the content (e.g., a recorder). Accordingly, in the information processing method, appropriate information that indicates the relation between the viewing of the broadcast content and the browsing of the web page by a user is outputted using the reproduction device that records a broadcast content and thereafter reproduces the broadcast content.

In the calculating, the index for each of time differences from the reproduction date and time to the display date and time may be calculated. In the outputting, the indices calculated for the time differences may be outputted.

According to the above, a plurality of indices corresponding to the time differences from the reproduction date and time to the display date and time can be outputted. The time difference corresponds to a time period from viewing of a content to an action for browsing the web page by a user, and is conceivable to reflect the magnitude of user's desire of obtaining much more information about the content, and the height in interest for the content, or such magnitude of user's reaction as a result of the viewing of the content by the user. Accordingly, in the information processing method, appropriate information that indicates the relation between the viewing of a broadcast content and the browsing of a web page by a user is associated with the magnitude of user's reaction and then outputted.

The first information may include an Internet Protocol (IP) address associated with the reproduction device that has provided the first information. The second information may include an IP address associated with each of the one or more display devices that have provided the second information. In the calculating, the index may be calculated using a display device among the one or more display devices as the first display device. The display device is associated with an IP address identical to the IP address associated with the first reproduction device.

According to the information processing method, an index in terms of the reproduction device and the display device which are associated with each other in the same IP address is calculated and outputted. Here, the association between the reproduction device and the display device in the same IP address includes a case where the first information and the second information are set in the same house. In other words, through the information processing method, an index indicating whether the reproduction of the content by the reproduction device and the display of the web page by the display device are performed with being associated with each other is easily calculated and outputted, in terms of the reproduction device and the display device which are provided in the same house. Accordingly, in the information processing method, appropriate information that indicates the relation between the viewing of the broadcast content and the browsing of the web page by individual users is outputted more easily.

An information processing system according to the present disclosure includes: a first obtainer that obtains, from each of one or more reproduction devices that have reproduced a content contained in a broadcast program, first information indicating a reproduction history of the content reproduced; a second obtainer that obtains second information indicating a display history of a web page displayed by each of one or more display devices; a calculator that calculates an index indicating a relation between reproduction of the content by a first reproduction device among the one or more reproduction devices and display of the web page by a first display device that has a relation to the first reproduction device among the one or more display devices, based on the first information and the second information which are obtained; and an outputter that outputs the index calculated by the calculator.

With the information processing system, the effects same as those obtained by the aforementioned information processing method are exhibited.

A program according to the present disclosure causes a computer to execute the information processing method described above.

[Advantageous Effects of Invention]

With an information processing method according to the present disclosure, appropriate information that indicates a relation between viewing of a broadcast content and browsing of a web page by individual users can be outputted.

[Brief Description of Drawings]

[FIG. 1]

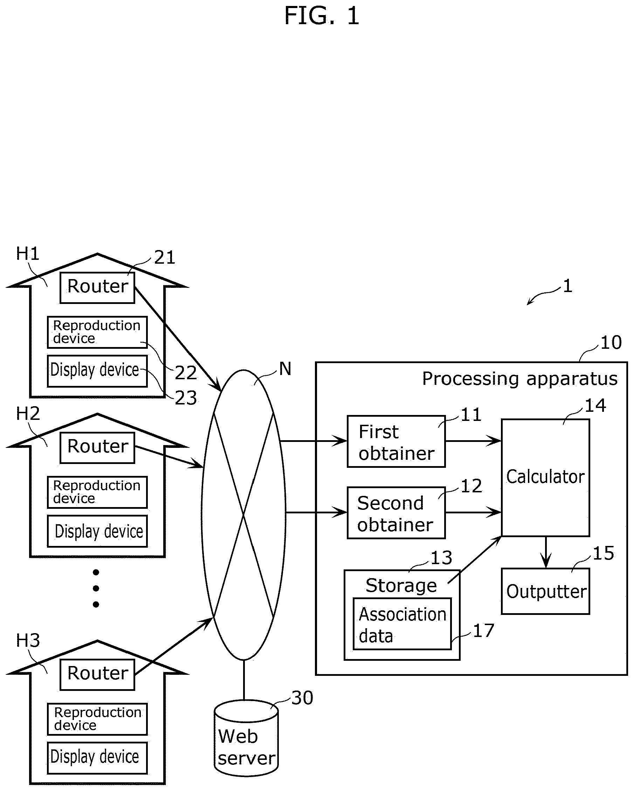

FIG. 1 is an explanatory diagram showing a configuration of an information processing system according to an embodiment.
[FIG. 2]

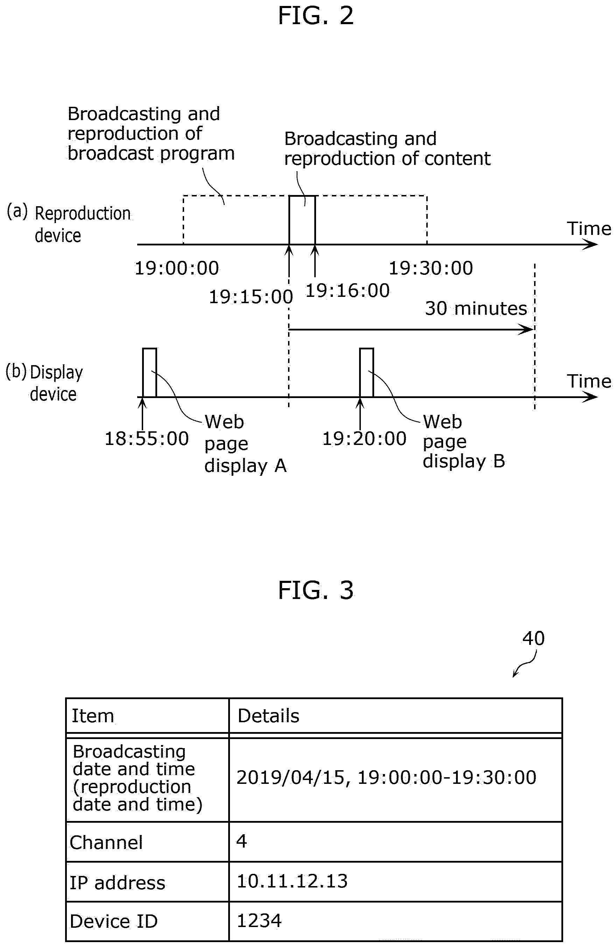

FIG. 2 is an explanatory diagram showing a relation between reproduction of a content by a reproduction device and display of a web page by a display device, according to the embodiment.
[FIG. 3]
FIG. 3 is an explanatory diagram showing an example of a reproduction history according to the embodiment.
[FIG. 4]

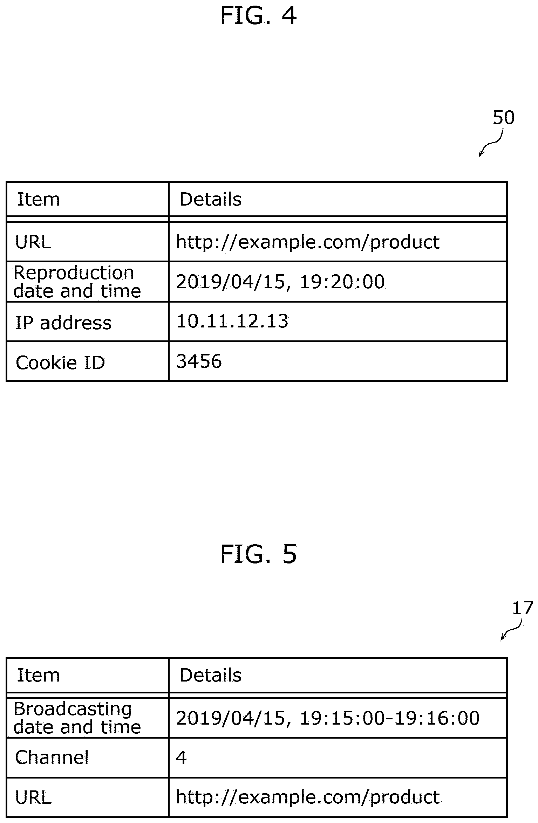

FIG. 4 is an explanatory diagram showing an example of a display history according to the embodiment.
[FIG. 5]
FIG. 5 is an explanatory diagram showing an example of association data according to the embodiment.
[FIG. 6]

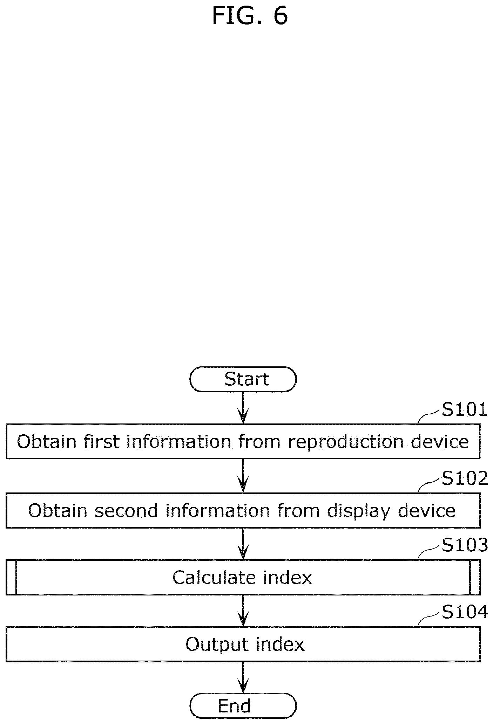

FIG. 6 is a flowchart showing processing in a processing apparatus according to the embodiment.
[FIG. 7]

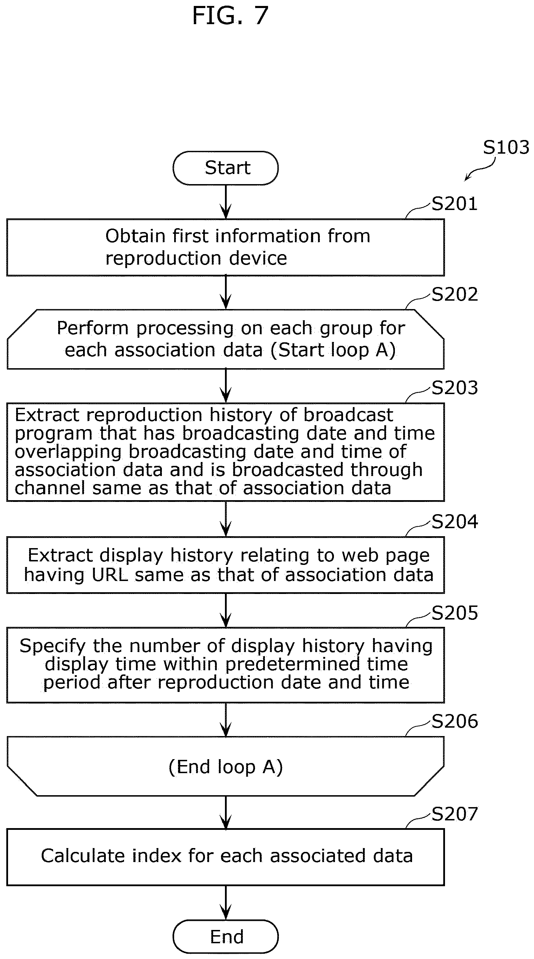

FIG. 7 is a flowchart showing the processing, in detail, in the processing apparatus according to the embodiment.
[FIG. 8]

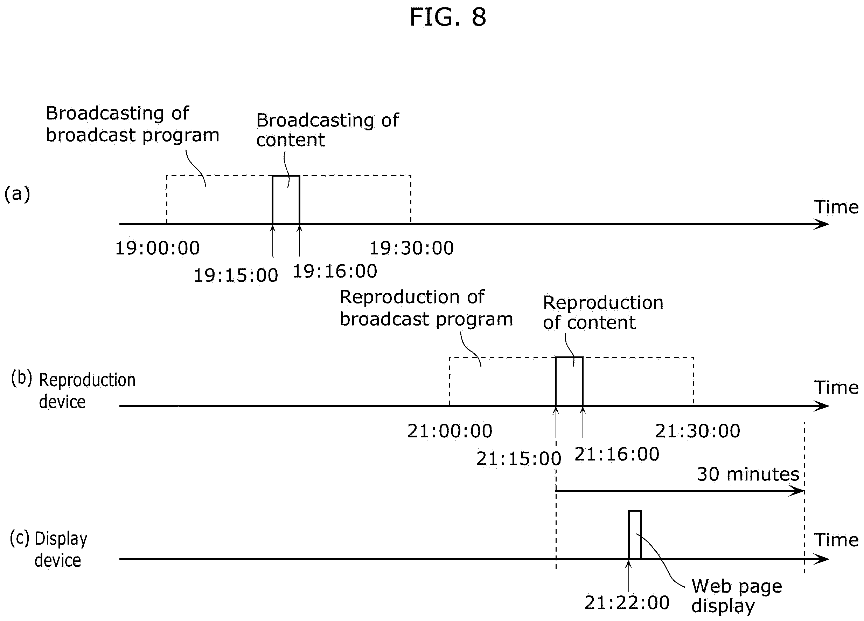

FIG. 8 is an explanatory diagram showing a relation between reproduction of a content by a reproduction device and display of a web page by a display device, according to a variation of the embodiment.
[FIG. 9]

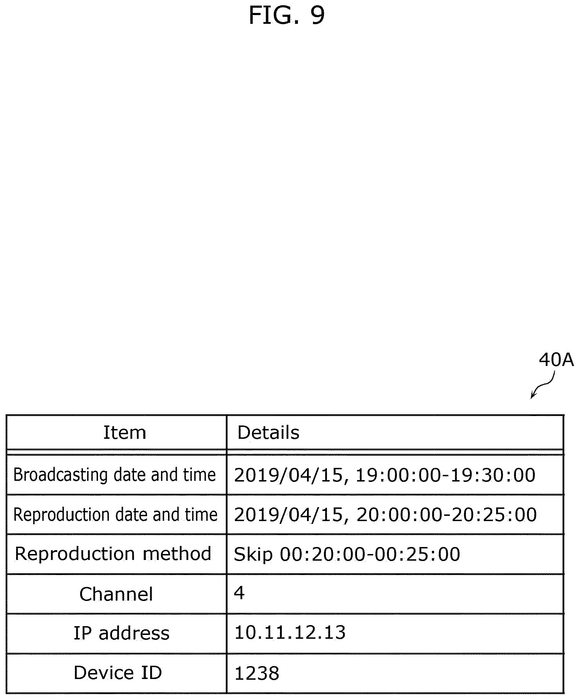

FIG. 9 is an explanatory diagram showing an example of a reproduction history according to the variation of the embodiment.

[Description of Embodiments]

Embodiments are described hereinafter, with reference to the drawings appropriately. Here, description that is precise beyond the necessity may be omitted. For example, detailed description for well-known matters and duplicate description for substantially the same configuration may be omitted. This prevents the below description from becoming unnecessarily redundant, to facilitate the understanding by a person skilled in the art.
It should be noted that an inventor (inventors) provides the accompanied drawings and the description below for a person skilled in the art to understand the present disclosure sufficiently, and thus does not intend to limit the subject matters recited in the scope of claims, by the drawings and the description.
Hereinafter, a background from which the present disclosure has been achieved and problems which are to be solved by the present disclosure are described in detail, and then embodiments are described.
In the present embodiment, an information processing apparatus that outputs appropriate information indicating a relation between viewing of a broadcast content and browsing of a web page by individual users is described.
FIG. 1 is an explanatory diagram showing a configuration of information processing system 1 according to the present embodiment.
As shown in FIG. 1, information processing system 1 includes processing apparatus 10, router 21, reproduction device 22, display device 23, and web server 30. A plurality of houses H1, H2, ..., and H3 (also referred to as houses H1 and so on) each may have one router 21, one reproduction device 22, and one display device 23. The description is provided with reference to this case as an example. Here, the numbers of such devices and components are not limited to one, and may be two or more. The houses may be detached houses or dwelling units in a multiple dwelling house. The number of houses H1 and so on is one or more, and may be a level of hundreds of thousands to several millions.
Processing apparatus 10 and each of houses H1 and so on are connected via network N in a communicable manner.
Processing apparatus 10 performs processing on information obtained from reproduction device 22 and display device 23 to output information that indicates the relation between viewing of a broadcast content and browsing of a web page by individual users. The processing on the information by processing apparatus 10 is described later, in detail.
Router 21 is a network device provided in each of houses H1 and so on. Router 21 can communicate with reproduction device 22 and display device 23 provided in each of houses H1 and so on, in which the relevant router 21 is also provided, through a wireless communication in a relatively close range (for example, Wi-Fi or Blue tooth (registered trademark)) or a wired communication. Router 21 is connected to network N outside houses H1 and so on, and has a function of connecting reproduction device 22 and display device 23 with network N in a communicable fashion. Router 21 has a communication interface for connecting to network N, which is provided with a single IP address. Packets that are transmitted from reproduction device 22 and display device 23 and received by router 21 are to be transmitted toward network N. Such packets have a source address that is converted to a common IP address (i.e., the aforementioned single IP address) by an address-converting function of router 21.

Reproduction device 22 receives broadcast programs each containing contents, and reproduces the contents by converting the received broadcast programs to signals displayable on a display device. Reproduction device 22 receives video data relating to the broadcast programs from a broadcast station (not shown) through broadcast wave, a cable, or such a medium. The reproduced broadcast program is supposed to be viewed by users. Reproduction device 22 stores a history of the reproduced broadcast programs (it is also referred to as a reproduction history) upon reproducing the broadcast programs, and provides the history to processing apparatus 10. The reproduction history is described later, in detail.

Types of the broadcast programs may be any including news programs, documentary programs, variety programs, or any other program. A content contained in the broadcast program is a specific part of the broadcast program. The content may be a CM moving image, for example, and description is provided using this case as an example. Here, the content may be another special part of the moving image contained in the broadcast program (for example, a part of a specified topic or product, or a part contained in a specified time zone in the broadcast program). Specifically, reproduction device 22 is a television receiver, and description is provided using this case as an example. Furthermore, a case where reproduction device 22 is a recorder is described later as a variation of the embodiment.

Display device 23 displays web pages. Display device 23 obtains data that describes a web page (for example, data described by hypertext markup language (HTML)) from web server 30 through network N, and displays the data on a display screen. In response to an operation by a user on display device 23 with his/her intension of browsing a web page, display device 23 sends, to web server 30, an obtainment request for obtaining data and then receives the data. The web page displayed by display device 23 is supposed to be browsed by the user. Specifically, display device 23 includes a personal computer, a smartphone, a tablet terminal, and so on.

Web server 30 is connected to network N, and can deliver data that describes web pages. Upon receiving the obtainment request for obtaining data of a web page from display device 23, web server 30 sends, to display device 23, data that describes the web page, in response to the received obtainment request. Meanwhile, display device 23 stores a history of the delivered data (it is also referred to as a display history), and provides the history to processing apparatus 10.

Processing apparatus 10 is now described.

As shown in FIG. 1, processing apparatus 10 includes first obtainer 11, second obtainer 12, storage 13, calculator 14, and outputter 15.

First obtainer 11 obtains first information indicating a reproduction history of reproduced contents, from the respective one or more reproduction devices 22 that has reproduced the contents contained in broadcast programs. First obtainer 11 obtains the reproduction history from each of the plurality of reproduction devices 22 via network N by means of a communication interface.

Second obtainer 12 obtains second information indicating a display history of web pages that have displayed by one or more display devices 23 that that have displayed the web pages. Second obtainer 12 obtains a display history from web server 30 via network N by means of a communication interface.

Storage 13 stores association data 17 used for calculation by calculator 14. In association data 17, a content is associated with a web page. Association data 17 is supposed to associate a content with a web page, which relate to a common topic or product. Association data is, for example, data associating a CM moving image of a specified company with a web page of this specified company.

Association data 17 is stored after the content-reproduction date and time is determined, and then read out by calculator 14. The time point at which the content-reproduction date and time is stored may be ahead of the reproduction of the content, or may be later than the reproduction of the content. Association data 17 is described later in detail.

Calculator 14 is a processor that calculates information that indicates a relation between viewing of a broadcast content and browsing of a web page by individual users. Calculator 14 calculates an index indicating that a web page has been displayed by one display device 23 (corresponding to a first display device) having a relation to a first reproduction device among one or more display devices 23, in relation to the reproduction of a content by one reproduction device 22 (corresponding to the first reproduction device) among one or more reproduction devices 22, based on the obtained first information and second information. Specifically, calculator 14 calculates an index indicating that a web page has been displayed by the first display device based on an operation that a user has performed as a result of viewing the content reproduced by the first reproduction device.

The aforementioned index corresponds to a ratio of the number of times the web page has been displayed by the first display device based on an operation that a user has performed as a result of viewing the content reproduced by the first reproduction device, to the number of times the user has viewed the content reproduced by the first reproduction device. The index indicates what percentage of the users among users who viewed the content achieves at browsing of the web page. In other words, the index also indicates the percentage of contribution of the display of the content to the browsing of the web page.

The calculation of the index is performed using comparison between the content-reproduction date and time and the web-page display date and time. More specifically, calculator 14 calculates an index indicating that the web page has been displayed by display device 23 within a predetermined time period from the reproduction of the content by reproduction device 22. A specific method of calculating the index is described later in detail.

One of the specific examples of the first display device having a relation to the first reproduction device is a display device associated with the IP address same as the IP address associated with the first reproduction device. With this configuration, the first reproduction device and the first display device which are provided in the same house are used to calculate the above index. The association of an IP address with the reproduction device or the display device is described later.

Outputter 15 is a processor that outputs the calculated index. Any aspect or format of the outputting of an index by outputter 15 is employed, and may include, for example, storing the information including the index in a storage, transmitting the information including the index to an exterior device via network N, displaying the information including the index on a display screen, outputting the information including the index as sound, and so on.

FIG. 2 is an explanatory diagram showing a relation between the reproduction of a content by reproduction device 22 and the display of a web page by display device 23, according to the present embodiment. Here, the content and the web page relate to a common topic or product.

(a) in FIG. 2 shows the time period from 19:00:00 to 19:30:00 as a time period during which reproduction device 22 reproduces a broadcast program. Furthermore, the time period from 19:15:00 to 19:16:00 is shown as a time period during which reproduction device 22 reproduces a content. It should be noted that reproduction device 22 serving as a television receiver reproduces a broadcast program that is put on the air in real time, so that the time period during which the broadcast program is put on the air and the time period during which the broadcast program is reproduced are supposed to be the same.

(b) in FIG. 2 shows the time points of 18:50:00 (depicted as "display A") and 19:20:00 (depicted as "display B"), at which display device 23 displays a web page.

Here, display A is ahead of the reproduction of the content. Accordingly, the display cannot be performed as a result of the viewing of the reproduced content by a user.

On the other hand, display B is later than the reproduction of the content, and is performed within 30 minutes from the reproduction of the content. Accordingly, it is possible that display B indicates the display of the web page is performed as a result of the viewing of the reproduced content by a user. The time period of 30 minutes is a typical example of a time period, as objectively determined, during which a user memorizes the viewed content and takes an action of browsing (displaying) the web page based on the memory. This time period can be an hour or three hours instead of 30 minutes, and is reasonably 24 hours at longest. However, the time period is not limited thereto. The time period is referred to as a predetermined time period.

Processing apparatus 10 calculates and outputs an index indicating that the display of the web page is performed based on an operation that a user performed as a result of viewing of the content reproduced by reproduction device 22, as shown in display B. The index indicates a ratio of contribution to the display of the web page (i.e., browsing of the web page by a user) by the reproduction of the content.

Hereinafter, information or data which processing apparatus 10 obtains or uses is described.

FIG. 3 is an explanatory diagram showing reproduction history 40, which is an example of the reproduction history according to the present embodiment.

As shown in FIG. 3, reproduction history 40 includes at least a broadcasting date and time, a channel, an Internet Protocol (IP) address, and a device ID.

The broadcasting date and time is information that indicates the broadcasting date and time of a broadcast program that has been reproduced by reproduction device 22. When reproduction device 22 serves as a television receiver, reproduction device 22 reproduces, in real time, the broadcast program that is put on the air, so that the broadcasting date and time is the same as the reproduction date and time.

The channel is information that indicates a channel for the broadcast program that has been reproduced by reproduction device 22.

The IP address is associated with reproduction device 22. The IP address is, specifically, set on a communication interface connected to network N, among communication interfaces of router 21, which are connected to reproduction device 22. The IP address is used as a transmission source IP address of a packet that is received when the reproduction history is received by means of communication. Accordingly, first obtainer 11 can obtain the IP address from the packet and perform the setting.

The device ID is an identifier by which reproduction device 22 can be identified uniquely.

One reproduction history 40 is generated by reproduction device 22 when reproduction device 22 reproduces a single broadcast program once. Reproduction history 40 is generated by reproduction device 22, then provided to processing apparatus 10, and then obtained by first obtainer 11. Reproduction device 22 can transmit a plurality of reproduction histories 40 correctively to processing apparatus 10. Such corrective transmission exhibits higher efficiency. Reproduction device 22 correctively transmits reproduction histories 40 that have been generated by reproduction device 22 until then, toward processing apparatus 10 for every hour, every day, or every week, for example.

FIG. 4 is an explanatory diagram showing display history 50 that is an example of the display history according to the present embodiment.

As shown in FIG. 4, reproduction history 50 includes at least a uniform resource locator (URL), a display date and time, an IP address, and a Cookie ID.

The URL is information that indicates an address of the web page displayed by display device 23.

The display date and time is information that indicates date and time at which display device 23 displays a web page.

The IP address is associated with display device 23. The IP address is, specifically, set on a communication interface connected to network N, among communication interfaces of router 21, which are connected to display device 23. The IP address is used as a transmission source IP address of a packet that is received when web server 30 receives a request of obtaining data that describes the web page. Web server 30 can use the IP address obtained from the transmission source IP address, as an IP address associated with display device 23.

The Cookie ID is an identifier that can uniquely distinguish sessions of the web access between display device 23 and web server 30.

Display history 50 is information, one of which is generated by server 30 when one display device 23 displays a web page once. Display history 50 is generated by web server 30, then provided to processing apparatus 10, and then obtained by second obtainer 12. Web server 30 can correctively transmit a plurality of display histories 50 to processing apparatus 10. Such corrective transmission exhibits higher efficiency. Web server 30 correctively transmits display histories 50 that have been generated until then, to processing apparatus 10 for every hour, every day, or every week, for example.

FIG. 5 is an explanatory diagram showing an example of association data 17 according to the present embodiment.

Association data 17 shown in FIG. 5 includes at least a broadcasting date and time, a channel, and an URL. In association data 17, a content is associated with a web page, and one association data 17 is generated for one content, for example.

The broadcasting date and time is information that indicates a date and time at which a content is broadcasted. The content is a part of a broadcast program, so that the date and time at which the content is broadcasted is included in a time period in the date and time at which a broadcast program including the content is broadcasted.

The channel is information that indicates a channel at which the content is broadcasted.

The URL is information that indicates the URL of a web page associated with the content. It should be noted that the number of the URL is not limited to one, but may be plural numbers.

Association data 17 is read out by calculator 14, and is used upon calculation of an index.

FIG. 6 is a flowchart showing processing in processing apparatus 10 according to the present embodiment.

In Step S101, first obtainer 11 obtains the first information that indicates a reproduction history of the reproduced contents from the respective one or more reproduction devices 22 that have reproduced the contents contained in the broadcast program.

In Step S102, second obtainer 12 obtains second information that indicates a display history of the web pages displayed by the one or more display devices.

In Step S103, calculator 14 calculates an index that indicates a relation between the reproduction of a content by the first reproduction device among one or more reproduction devices and the display of a web page by the first display device provided in a house at which the first reproduction device is also provided, among one or more display devices, based on the obtained first information and second information. The detailed processing in Step S103 is described later.

In Step S104, outputter 15 outputs the index calculated in Step S103.

FIG. 7 is a flowchart showing detailed processing in processing apparatus 10 according to the present embodiment. The processing shown in FIG. 7 indicates the processing included in Step S103 in FIG. 6.

In Step S201, calculator 14 extracts a reproduction history and a display history which are identical in IP address, and specifies these histories as a group. The specified group includes reproduction device 22 and display device 23 which are connected to the same router 21, i.e., reproduction device 22 and display device 23 which are provided in the same house.

In Step S202, calculator 14 performs starting processing on loop A in which processing from Step S203 to Step S205 (described later) is repeated. In loop A, processing is performed for each of the groups specified in Step S201 with focusing on the respective association data, and finally the processing is performed on all the groups and all the association data.

In Step S203, calculator 14 extracts a reproduction history of a certain broadcast program that has a broadcasting date and time overlapping a broadcasting date and time of the association data and is broadcasted through a channel same as that of the association data. The broadcast program having the broadcasting date and time that overlaps the broadcasting date and time of the association data can also be referred to as a broadcast program having the broadcasting date and time containing at least a part of the broadcasting date and time of the association data.

In Step S204, calculator 14 extracts a display history of a web page having an URL that is the same as that of the association data.

In Step S205, calculator 14 specifies the number of the display histories having display date and times that are included within a predetermined time period from the reproduction date and time.

In Step S206, calculator 14 performs ending processing on loop A. Specifically, calculator 14 performs determination as to whether the processing from Step S203 to Step S205 is performed for each of the groups specified in Step S201 with focusing on the respective association data. If not, calculator 14 performs control on the processing to be performed with focusing on a group or association data, on which the processing is not performed yet.

In Step S207, calculator 14 calculates, for the respective association data, an index indicating that the browsing of a web page corresponding to a content reproduced by reproduction device 22 is performed by display device 23 provided in the house in which reproduction device 22 is also provided, within a predetermined time period from the reproduction of the content by reproduction device 22. Specifically, calculator 14 calculates the index using the following Formula 1.

$$\text{Index} = Q/P \quad (\text{Formula 1})$$

Here, P is the number of times the content relating to the association data has been reproduced, i.e., the number of times a user has viewed the content relating to the association data. Q indicates the number of times a web page relating to the association data has been displayed within a predetermined time period from the display of the content relating to the association data, i.e., the number of times the web page has been displayed based on an operation that a user has performed as a result of viewing the content relating to the association data.

Display device 23 may be connected to network N and web server 30 via router 21 at the beginning. If the connection is switched to a carrier network later, display device 23 is to communicate with web server 30 without communicating with router 21. At this time, the IP address associated with display device 23 (see FIG. 4) is not used for the communication between display device 23 and server 30. In this situation, Cookie ID (see FIG. 4) generated in the first connection via router 21 is also used for the later connection in the carrier network. Accordingly, even if an IP address different from an IP address first associated with display device 23 is used for the communication, calculator 14 can identify the display histories that have the same Cookie IDs, as a display history of a single display device 23.

It should be noted that calculator 14 may calculate indices for the respective time differences between the reproduction date and time and the display date and time. For example, calculator 14 may calculate the index for each of the plural time differences which include a case in which the time difference from the reproduction date and time to the display date and time is within 30 minutes, a case in which the time difference from the reproduction date and time to the display date and time is within 3 hours, and a case in which the time difference from the reproduction date and time to the display date and time is within 12 hours. In such a case, outputter 15 is caused to output the indices respectively calculated for the time differences. With this operation, processing apparatus 10 can output the indices each reflecting the magnitude of reaction of a user.

Although only a numeral value to be calculated by Formula 1 is exemplified as the index, the index is not limited thereto. For example, a value of Q can be the important index. The value of Q includes the number of times itself the web page relating to the association data has been displayed, within a predetermined time period from the display of the content that relates to the association data.

[Variation of embodiment]

In the variation of the embodiment, an information processing apparatus for achieving the object is described with focusing on a case in which the reproduction device is a recorder.

The constitution of an information processing system according to the variation of the embodiment is the same as information processing system 1 according to Embodiment 1 but reproduction device 22 in Embodiment 1 is a recorder in the variation of the variation of the embodiment.

Specifically, reproduction device 22 that serves as a recorder has the functions similar to those of reproduction device 22 that serves as a television receiver in Embodiment 1, but is different from reproduction device 22 in Embodiment 1 in a point that reproduction device 22 in the variation of the embodiment temporarily stores video data and then can reproduce the video data in various reproduction format. In other words, reproduction device 22 serving as the recorder can reproduce broadcast programs at any timing after receiving them, reproduce them with changing reproduction speed, and skip a part of them.

Hereinafter, regarding reproduction device 22 that also serves as a recorder, a difference from reproduction device 22 that also serves as a television is mainly described. Other functions are the same as those of reproduction device 22 that also serves as a television, and thus the detailed description of the other functions is omitted.

Reproduction device 22 that also serves as a recorder receives a broadcast program containing a content, and stores video data of the received broadcast program in a storage to record the video data. Then, reproduction device 22 reproduces the broadcast program based on the stored data after the recording. When video data is stored in the storage, the video data may be encoded by an appropriate format. When the broadcast program is reproduced from the stored data, the data may be decoded by an appropriate format. Any format may be employed for encoding or decoding, and a conventional technique of encoding or decoding can be employed.

FIG. 8 is an explanatory diagram showing a relation between the reproduction of a content by reproduction device 22 and the display of a web page by a display device, according to the variation of the embodiment.

(a) in FIG. 8 shows a time period from 19:00:00 to 19:30:00 as a time period during which a broadcast program is put on the air, and a time period from 19:15:00 to 19:16:00 as a time period during which a content is reproduced. If reproduction device 22 performs real-time reproduction, the time periods shown in (a) in FIG. 8 correspond to a time period during which the broadcast program or the content is reproduced, and thus are the same as those shown in (a) in FIG. 2.

(b) in FIG. 8 shows a time period from 21:00:00 to 21:30:00 as a time period during which a broadcast program is reproduced by reproduction device 22, and a time period from 21:15:00 to 21:16:00 as a time period during which a content is reproduced. In the time periods shown in (b) in FIG. 8, the broadcast program recorded by reproduction device 22 is reproduced by an operation by a user, for example.

(c) in FIG. 8 shows a time point of 21:22:00, at which display device 23 displays a web page. The display at this time point is later than the reproduction of the content and is within 30 minutes from the reproduction of the content. Accordingly, the display may be performed based on the operation that a user has performed as a result of viewing the reproduced content. Regarding the 30 minutes mentioned above, the cases same as those in Embodiment 1 are applied.

Processing apparatus 10 calculates and outputs an index indicating that the web page has been displayed based on the operation that a user has performed as a result of viewing the content reproduced by reproduction device 22, as shown in (c) in FIG. 8. The index indicates the ratio of contribution of the display of a content to the browsing of a web page.

FIG. 9 is an explanatory diagram showing reproduction history 40A, which is an example of the reproduction history according to the variation of the embodiment.

As shown in FIG. 9, reproduction history 40A includes at least a broadcasting date and time, a reproduction date and time, a reproduction form, a channel, an Internet Protocol (IP) address, and a device ID. One reproduction history 40A is generated when reproduction device 22 reproduces a single broadcast program once.

The broadcasting date and time is information that indicates the broadcasting date and time of a broadcast program reproduced by reproduction device 22. The reproduction date and time is information that indicates the reproduction date and time of the broadcast program reproduced by reproduction device 22.

Accordingly, in reproduction device 22 that also serves as a recorder, the date and time when a broadcast program has been broadcasted is different from the date and time when the broadcast program has been reproduced after being recorded, and the reproduction date and time is later than the broadcasting date and time. This is the difference between the reproduction device that also serves as a recorder and reproduction device 22 that also serves as a television receiver.

The reproduction format is information indicating the reproduction format employed when reproduction device 22 reproduces the recorded broadcast program. The reproduction format includes information of high-speed reproduction, reverse reproduction, and momentary-suspended reproduction, in addition to reproduction at a normal speed (also referred to as normal reproduction), as well as information for specifying a time period during which such reproduction is performed. Although it is assumed, as an example, that the time period is expressed by a relative time period in the broadcast program, i.e., an elapsed time period from the starting point of the broadcast program as an origin (zero), the time period is not limited thereto and may be expressed by a real time period.

The channel, the IP address and the device ID are the same as those in Embodiment 1.

Processing for calculating the index is the same as those shown in the flowchart in FIG. 7 according to Embodiment 1. However, the broadcasting date and time and the reproduction date and time are different from each other in the reproduction history. Thus, it should be noted that the broadcasting date and time in Step S203 is different from the reproduction date and time in Step S205 in FIG. 7, for example.

As mentioned above, in the information processing methods respectively in the present embodiment and the variation of the embodiment, an index indicating whether reproduction of a content by the reproduction device and display of a web page by the display device having a relation to the reproduction device are performed in connection with each other is calculated and outputted. Thus, according to the respective information processing methods, appropriate information that indicates a relation between the viewing of a broadcast content and the browsing of a web page by individual users is outputted.

The index outputted through the information processing method reflects that a user has displayed a web page with his/her intension of browsing the web page corresponding to a content reproduced by a reproduction device, as a result of viewing the content. Accordingly, in the information processing method, appropriate information that indicates a relation between the viewing of a broadcast content and the browsing of a web page by individual users is outputted.

The index outputted through the information processing method indicates the ratio of the viewing leading to the browsing of web pages, among the total number of the viewing of contents by users. Accordingly, in the information processing method, appropriate and specific information that indicates a relation between the viewing of a broadcast content and the browsing of a web page by individual users is outputted.

According to the information processing method, an index that indicates a relation between the reproduction of a content and the display of a web page is calculated more easily, by the determination using the date and time when a reproduction device reproduces the content and the date and time when a display device displays the web page. Accordingly, in the information processing method, appropriate information that indicates the relation between the viewing of a broadcast content and the browsing of a web page is generated and outputted more easily.

According to the information processing method, the relevancy between the reproduction of a content and the display of a web page is determined based on the time difference between the reproduction date and time and the display date and time. Accordingly, in the information processing method, appropriate information that indicates the relation between the viewing of a broadcast content and the browsing of a web page by individual users is outputted more easily.

According to the information processing method, the aforementioned index is calculated based on the reproduction date and time which is identical to the broadcasting date and time, i.e., based on the reproduction by the reproduction device (a television receiver, for example) that reproduces a broadcasted content in real time. Accordingly, in the information processing method, appropriate information that indicates the relation between the viewing of a broadcast content and the browsing of a web page is outputted using the reproduction device that reproduces the broadcast content in real time.

According to the information processing method, the aforementioned index is calculated based on the reproduction of a content, which has the reproduction date and time later than the broadcasting date and time, i.e., based on the reproduction by the reproduction device (a recorder, for example) that records a broadcasted content and thereafter reproduces the content. Accordingly, in the information processing method, appropriate information that indicates the relation between the viewing of a broadcast content and the browsing of a web page, by a user, is outputted using the reproduction device that records a broadcast content and thereafter reproduces the broadcast content.

According to the information processing method, a plurality of indices can be outputted, which correspond to time differences between the reproduction date and time and the display date and time. The time difference corresponds to a time period from user's viewing of a content, to user's action of browsing a web page, and is conceivable to reflect the magnitude of user's desire, as a result of viewing the content, of obtaining much more information about the content, and height of the user's interest in the content, or such magnitude of user's reaction. Accordingly, in the information processing method, appropriate information that indicates the relation between the viewing of a broadcast content and the browsing of a web page, by a user, is associated with the magnitude of the user's reaction and then outputted.

As mentioned above, embodiments are described as examples of technique in the present disclosure. For the description, the accompanied drawings and detailed description are provided.

In view of the above, structural components described in the accompanied drawings and the detailed description may include structural components which are not necessary for achieving the object but exemplify the embodiments, in addition to structural components that are necessary for achieving the object. Accordingly, it should not be recognized immediately that these unnecessary structural components are necessary, by the accompanied drawings and the detailed description in which these unnecessary structural components are shown and described.

In addition, the embodiments exemplify techniques of the present disclosure, and thus various change, replacement, addition, omission, and so on can be added within the scope of claims and a range equivalent thereto.

[Industrial Applicability]

The present disclosure is applicable to an information processing method through which appropriate information indicating a relation between viewing of a broadcast content and browsing of a web page by individual users is outputted. Specifically, the present disclosure is applicable to a device for outputting information that indicates a relation between the viewing of a CM moving image and the browsing of a web page.

[Reference Signs List]

| 1 | Information processing system |
| 10 | Processing apparatus |
| 11 | First obtainer |
| 12 | Second obtainer |
| 13 | Storage |
| 14 | Calculator |
| 15 | Outputter |
| 17 | Association data |

21          Router
22          Reproduction device
23          Display device
30          Web server
40, 40A     Reproduction history
50          Display history
H1, H2, and H3  House
N           Network

**Claims**

1.  An information processing method comprising:

    obtaining, from each of one or more reproduction devices that have reproduced a content contained in a broadcast program, first information indicating a reproduction history of the content reproduced;
    obtaining second information indicating a display history of a web page displayed by each of one or more display devices;
    calculating an index indicating a relation between reproduction of the content by a first reproduction device among the one or more reproduction devices and display of the web page by a first display device that has a relation to the first reproduction device among the one or more display devices, based on the first information and the second information which are obtained; and
    outputting the index calculated in the calculating.

2.  The information processing method according to claim 1, wherein
    the calculating includes calculating the index indicating that the display of the web page has been performed by the first display device based on an operation that a user has performed as a result of viewing the content reproduced by the first reproduction device.

3.  The information processing method according to claim 1 or 2, wherein
    the index is a ratio of a total number of times the display of the web page has been performed by the first display device based on an operation that a user has performed as a result of viewing the content reproduced by the first reproduction device, to a total number of times the user has viewed the content reproduced by the first reproduction device.

4.  The information processing method according to any one of claims 1 to 3, wherein

    the first information includes a reproduction date and time at which the reproduction of the content has been performed by the first reproduction device,
the second information includes a display date and time at which the display of the web page has been performed by the first display device, and
the calculating includes calculating the index by comparing the reproduction date and time included in the first information obtained with the display date and time included in the second information obtained.

5.  The information processing method according to claim 4, wherein
    the calculating includes calculating the index indicating that the display of the web page has been performed by the first display device within a predetermined time period from the reproduction of the content by the first reproduction device.

6.  The information processing method according to claim 4 or 5, wherein
    the reproduction date and time is identical to a broadcasting date and time of the content.

7.  The information processing method according to claim 4 or 5, wherein
    the reproduction date and time is later than a broadcasting date and time of the content.

8.  The information processing method according to claim 7, wherein

    the calculating includes calculating the index for each of time differences from the reproduction date and time to the display date and time, and
    the outputting includes outputting the indices calculated for the time differences.

9.  The information processing method according to any one of claims 1 to 8, wherein

    the first information includes an Internet Protocol (IP) address associated with the reproduction device that has provided the first information,
    the second information includes an IP address associated with each of the one or more display devices that have provided the second information, and
    the calculating includes calculating the index using a display device among the one or more display devices as the first display device, the display device being associated with an IP address identical to the IP address associated with the first reproduction device.

10. An information processing system comprising:

a first obtainer that obtains, from each of one or more reproduction devices that have reproduced a content contained in a broadcast program, first information indicating a reproduction history of the content reproduced;

a second obtainer that obtains second information indicating a display history of a web page displayed by each of one or more display devices;

a calculator that calculates an index indicating a relation between reproduction of the content by a first reproduction device among the one or more reproduction devices and display of the web page by a first display device that has a relation to the first reproduction device among the one or more display devices, based on the first information and the second information which are obtained; and

an outputter that outputs the index calculated by the calculator.

11. A program for causing a computer to execute the information processing method according to any one of claims 1 to 9.

# FIG. 1

# FIG. 2

Broadcasting and
reproduction of
broadcast program

Broadcasting and
reproduction of content

(a) Reproduction
device

Time

19:00:00

19:15:00  19:16:00

19:30:00

30 minutes

(b) Display
device

Time

18:55:00  Web
page
display A

19:20:00  Web
page
display B

# FIG. 3

40

| Item | Details |
|------|---------|
| Broadcasting date and time (reproduction date and time) | 2019/04/15, 19:00:00-19:30:00 |
| Channel | 4 |
| IP address | 10.11.12.13 |
| Device ID | 1234 |

# FIG. 4

50

| Item | Details |
|------|---------|
| URL | http://example.com/product |
| Reproduction date and time | 2019/04/15, 19:20:00 |
| IP address | 10.11.12.13 |
| Cookie ID | 3456 |

# FIG. 5

17

| Item | Details |
|------|---------|
| Broadcasting date and time | 2019/04/15, 19:15:00-19:16:00 |
| Channel | 4 |
| URL | http://example.com/product |

# FIG. 6

```
        ┌─────────────┐
        │    Start    │
        └──────┬──────┘
               │                          S101
               ▼
┌──────────────────────────────────────────────┐
│ Obtain first information from reproduction device │
└──────────────────────┬───────────────────────┘
                       │                  S102
                       ▼
┌──────────────────────────────────────────────┐
│  Obtain second information from display device │
└──────────────────────┬───────────────────────┘
                       │                  S103
                       ▼
║┌────────────────────────────────────────────┐║
║│              Calculate index               │║
║└────────────────────────────────────────────┘║
                       │                  S104
                       ▼
┌──────────────────────────────────────────────┐
│                 Output index                 │
└──────────────────────┬───────────────────────┘
                       │
                       ▼
               ┌─────────────┐
               │     End     │
               └─────────────┘
```

# FIG. 7

Start

S103

Obtain first information from
reproduction device

S201

Perform processing on each group for
each association data (Start loop A)

S202

Extract reproduction history of broadcast
program that has broadcasting date and time
overlapping broadcasting date and time of
association data and is broadcasted through
channel same as that of association data

S203

Extract display history relating to web page
having URL same as that of association data

S204

Specify the number of display history having
display time within predetermined time
period after reproduction date and time

S205

(End loop A)

S206

Calculate index for each associated data

S207

End

# FIG. 8

(a)

Broadcasting of broadcast program · Broadcasting of content

Time

19:00:00 · 19:15:00 · 19:16:00 · 19:30:00

(b) Reproduction device

Reproduction of broadcast program · Reproduction of content

Time

21:00:00 · 21:15:00 · 21:16:00 · 21:30:00

30 minutes

(c) Display device

Time

21:22:00 · Web page display

EP 3 979 655 A1

FIG. 9

40A

| Item | Details |
|---|---|
| Broadcasting date and time | 2019/04/15, 19:00:00-19:30:00 |
| Reproduction date and time | 2019/04/15, 20:00:00-20:25:00 |
| Reproduction method | Skip 00:20:00-00:25:00 |
| Channel | 4 |
| IP address | 10.11.12.13 |
| Device ID | 1238 |

| | | International application No. |
|---|---|---|
| **INTERNATIONAL SEARCH REPORT** | | PCT/JP2020/001148 |

**A. CLASSIFICATION OF SUBJECT MATTER**
Int. Cl. H04N21/254(2011.01)i, H04N21/258(2011.01)i, G06Q30/02(2012.01)i
FI: H04N21/258, H04N21/254, G06Q30/02 382

According to International Patent Classification (IPC) or to both national classification and IPC

**B. FIELDS SEARCHED**

Minimum documentation searched (classification system followed by classification symbols)
Int. Cl. H04N21/254, H04N21/258, G06Q30/02

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/183703 A1 (DENTSU INC.) 26 October 2017, | 1, 9-11 |
| A | paragraphs [0034]-[0042], fig. 2 | 2-8 |
| A | JP 2016-208289 A (SONY CORP.) 08 December 2016, paragraphs [0110]-[0138], fig. 4 | 1-11 |

| ☐ Further documents are listed in the continuation of Box C. | ☒ See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18.03.2020 | 31.03.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT
Information on patent family members

| | International application No. |
|---|---|
| | PCT/JP2020/001148 |

| Patent Documents referred to in the Report | Publication Date | Patent Family | Publication Date |
|---|---|---|---|
| WO 2017/183703 A1 | 26.10.2017 | EP 3447709 A1 paragraphs [0034]-[0042], fig. 2 | |
| JP 2016-208289 A | 08.12.2016 | WO 2016/170728 A1 paragraphs [0110]-[0138], fig. 4 | |

Form PCT/ISA/210 (patent family annex) (January 2015)

**EP 3 979 655 A1**

REFERENCES CITED IN THE DESCRIPTION

**Patent documents cited in the description**

- JP 2017004490 A